# EUROPEAN PATENT APPLICATION

(11) **EP 3 240 000 A1**
(43) Date of publication of application: **01.11.2017**
(21) Application number: 15872475.7
(22) Date of filing: 29.10.2015
(51) Int. Cl.: H01G 11/62, H01M 10/0568

(54) **ELECTRICITY STORAGE DEVICE**

(30) Priority: 22.12.2014 JP 2014258840
(71) Applicant: Nisshinbo Holdings Inc., Tokyo 103-8650 (JP)
(72) Inventor: YUYAMA Kanako, Chiba-shi Chiba 267-0056 (JP); MASUDA Gen, Chiba-shi Chiba 267-0056 (JP)
(74) Representative: Bailey, Sam Rogerson
(86) International application number: PCT/JP2015/080496
(87) International publication number: WO 2016/103906

(57) **Abstract**

This electricity storage device which is configured to contain an ionic liquid represented by formula (1) in, for example, an electrolyte or an electrode has the advantage of being usable in a low-temperature environment in spite of the ionic liquid contained therein. 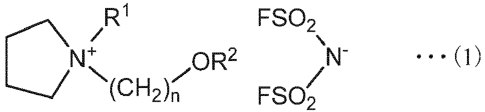 (In the formula, each of R¹ and R² independently represents an alkyl group having 1-5 carbon atoms; and n represents 1 or 2.)

## Description

### TECHNICAL FIELD

This invention relates to an electrical energy storage device. The invention relates more particularly to an electrical energy storage device which contains a specific ionic liquid.

### BACKGROUND ART

By having an ionic liquid serve as an electrolyte, it is possible to use the ionic liquid as a liquid electrolyte without needing to use an organic solvent. Efforts have thus been made in recent years to use, as the electrolyte in electrical double-layer capacitors, an ionic liquid instead of an electrolyte that is a solid salt in which the cation is, for example, a triethylmethylammonium (TEMA) or tetraethylammonium (TEA) ion.

Of such ionic liquids, 1-ethyl-3-methylimidazolium tetrafluoroborate (EMIBF4), which includes the tetrafluoroborate anion, is the most common, although art using pyrrolidinium salts, which are alicyclic ammonium salts, as liquid electrolytes is also known (see Patent Documents 1 and 2).

However, although increasing the rated voltage is essential for improving the capacity of electrical double-layer capacitors and other capacitors, liquid electrolytes obtained by diluting an electrolyte salt with an organic solvent have the drawback that, as the voltage rises, decomposition of the organic solvent occurs.

Also, when used in a high-temperature environment, organic solvents volatilize, leading both to gas generation and to internal shorting due to depletion of the electrolyte solution.

These problems can be resolved by using an ionic liquid alone as the liquid electrolyte, although liquid electrolytes consisting solely of an ionic liquid have a high viscosity, which gives rise to a different problem: an increase in the internal resistance of the electrical energy storage device. EMIBF4, which is a commonly used ionic liquid, has a relatively low viscosity, and so does not present a large problem in terms of the rise in internal resistance. However, it has a low withstand voltage, which means that it cannot be employed in electrical energy storage devices required to have higher voltages.

An additional problem with electrical energy storage devices in which ionic liquids are used is that, in low-temperature environments, the ionic liquid either undergoes a marked rise in viscosity or it solidifies, lowering the device performance.

### PRIOR ART DOCUMENTS

### PATENT DOCUMENTS

Patent Document 1: JP No. 5083577
Patent Document 2: CN-A 101747243

### SUMMARY OF THE INVENTION

### PROBLEMS TO BE SOLVED BY THE INVENTION

In light of the above circumstances, the object of this invention is to provide an electrical energy storage device which contains an ionic liquid yet can be used in low-temperature environments.

### MEANS FOR SOLVING THE PROBLEMS

The inventors have conducted extensive investigations, as a result of which they have discovered that an ionic liquid consisting of a specific pyrrolidinium cation and a bis(fluorosulfonyl)amide anion, along with having an excellent withstand voltage, possesses a low viscosity and a high electrical conductivity and thus has a low solution resistance, making it suitable as a liquid electrolyte or other component of an electrical energy storage device. The inventors have also found that electrical storage devices such as electrical double-layer capacitors obtained using this ionic liquid are able to charge and discharge even in a low-temperature environment.

Accordingly, this invention provides:
1. An electrical energy storage device characterized by comprising an ionic liquid of formula (1) 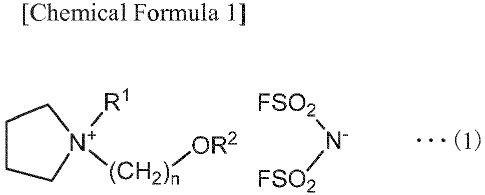 (wherein R¹ and R² are each independently an alkyl group of 1 to 5 carbon atoms, and n is 1 or 2);
2. The electrical energy storage device of 1 above which comprises a pair of polarizable electrodes, a separator interposed between the electrodes, and an electrolyte, wherein the electrolyte includes the ionic liquid of formula (1);
3. The electrical energy storage device of 1 above, wherein the electrolyte does not include an organic solvent;
4. The electrical energy storage device of 2 or 3 above, wherein the electrolyte consists solely of the ionic liquid of formula (1);
5. The electrical energy storage device of any of 1 to 4 above, wherein R¹ and R² are each independently a methyl group or an ethyl group; and
6. The electrical energy storage device of 5 above, wherein R¹ and R² are both methyl groups.

### ADVANTAGEOUS EFFECTS OF THE INVENTION

The ionic liquid used in this invention has a lower viscosity and a higher electrical conductivity than tetrafluoroborate salts of the same cation. The solution resistance is thus lower, resulting in a decrease in the internal resistance when used as a liquid electrolyte in electrical energy storage devices.

Also, compared with the commonly used ionic liquid EMIBF4, the ionic liquid of the invention has an excellent withstand voltage, and thus enlarges the working voltage range of electrical energy storage devices.

Furthermore, electrical energy storage devices containing this ionic liquid as the electrolyte are able to charge and discharge even in a low-temperature environment of about -20°C and undergo little decrease in capacity in low-temperature charging and discharging. Therefore, even though an ionic liquid alone serves as the electrolyte, the device performance at low temperature rises, enabling such devices to be used over a broad temperature range.

### BRIEF DESCRIPTION OF THE DIAGRAMS

[FIG. 1] FIG. 1 is a ¹H-NMR spectrum of the MEMP·FSA obtained in Synthesis Example 1.
[FIG. 2] FIG. 2 is a ¹H-NMR spectrum of the MMMP·FSA obtained in Synthesis Example 2.
[FIG. 3] FIG. 3 is a graph showing the potential window measurement results for the ionic liquids obtained in Synthesis Examples 1 and 2.

### EMBODIMENT FOR CARRYING OUT THE INVENTION

The invention is described more fully below.

The electrical energy storage device of the invention includes an ionic liquid of formula (1).

The inventive electrical energy storage device is exemplified by, without particular limitation, electrical double-layer capacitors, lithium-ion capacitors, lithium secondary batteries, lithium-ion secondary batteries, lithium/air batteries and proton polymer batteries. Of these, electrical double-layer capacitors are preferred.

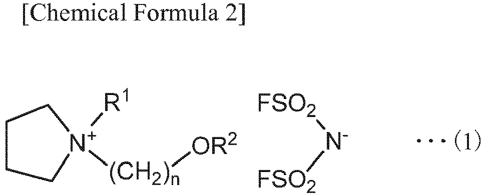

In the formula, R¹ and R² are each independently an alkyl group of 1 to 5 carbon atoms, and n is 1 or 2.

The alkyl group of 1 to 5 carbon atoms may be linear, branched or cyclic. Illustrative examples include methyl, ethyl, n-propyl, i-propyl, c-propyl, n-butyl, i-butyl, s-butyl, t-butyl, c-butyl, n-pentyl and c-pentyl groups. A linear alkyl group is preferred, with methyl and ethyl groups being more preferred, and a methyl group being even more preferred.

The ionic liquid used in the invention can be prepared by, for example, the method described in Patent Document 2. For instance, the ionic liquid can be obtained by carrying out an anion exchange reaction between an N-alkoxyalkyl-N-alkylpyrrolidinium halide (e.g., chloride, bromide) prepared in the usual manner and a bis(fluorosulfonyl)amide salt of an alkali metal (e.g., sodium, potassium) within an aqueous solvent.

Examples of cation structures in the ionic liquid that can be suitably used in this invention include, but are not limited to, those shown below.

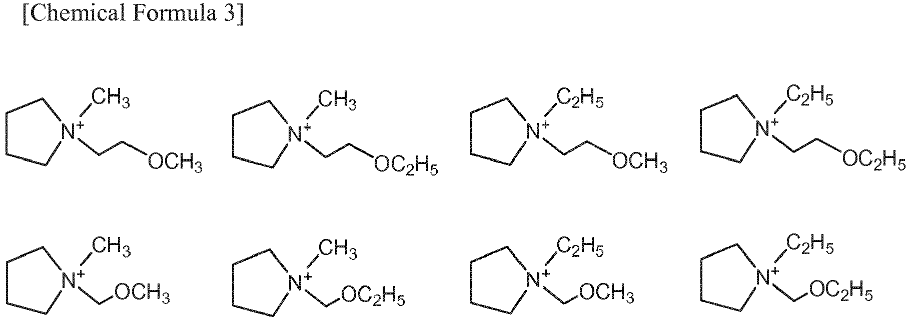

Of these, in terms of having a better thermal stability, cation structure (A) below is preferred; in terms of having a lower viscosity, cation structure (B) below is preferred.

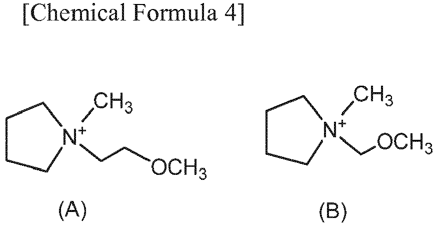

In the electrical energy storage device of the invention, the above ionic liquid is used as one material in a constituent part of the device; the ionic liquid is not particularly limited as to where it is used within the device, although use as a constituent material of the electrolyte or an electrode is preferred.

When the ionic liquid is used as an electrolyte material, it may be used alone or may be used by adding a hitherto widely used nonaqueous organic solvent or electrolyte salt to the ionic liquid, although using the ionic liquid alone is preferred.

Also, because the ionic liquid used in this invention has a relatively low viscosity itself and also has the ability to dissolve other electrolyte salts, even in cases where a nonaqueous solvent or an electrolyte salt is used, the amount of nonaqueous organic solvent used is preferably not more than 10 wt%, more preferably not more than 5 wt%, and optimally 0 wt% (meaning that the liquid component consists only of the ionic liquid) of the liquid electrolyte.

Illustrative examples of nonaqueous organic solvents include acyclic ethers such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme, ethyl cellosolve, ethyl carbitol, butyl cellosolve and butyl carbitol; heterocyclic ethers such as tetrahydrofuran, 2-methyltetrahydrofuran, 1,3-dioxolane and 4,4-dimethyl-1,3-dioxane; lactones such as γ-butyrolactone, γ-valerolactone, δ-valerolactone, 3-methyl-1,3-oxazolidin-2-one and 3-ethyl-1,3-oxazolidin-2-one; amides such as N-methylformamide, N,N-dimethylformamide, N-methylacetamide and N-methylpyrrolidinone; carbonates such as diethyl carbonate, dimethyl carbonate, ethyl methyl carbonate, propylene carbonate, ethylene carbonate and butylene carbonate; imidazolines such as 1,3-dimethyl-2-imidazolidinone; and nitriles such as acetonitrile and propionitrile. These may be used singly, or two or more may be used in admixture.

The electrolyte salt is suitably selected according to the type of electrical energy storage device. Illustrative examples include lithium salts such as lithium tetrafluoroborate, lithium hexafluorophosphate, lithium bis(trifluoromethanesulfonyl)amide, lithium bis(fluorosulfonyl)amide, lithium perchlorate, lithium acetate, lithium trifluoroacetate, lithium benzoate, lithium p-toluenesulfonate, lithium nitrate, lithium bromide and lithium iodide; and quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate.

When an electrolyte salt is used, the concentration thereof, although not particularly limited, is generally from about 0.5 to about 3 mol/L, preferably from about 0.8 to about 2 mol/L, and more preferably from about 0.9 to about 1.5 mol/L.

When the ionic liquid is used as an electrode material, the electrode material is preferably rendered into an electrode containing a gel-like composition prepared by mixing together a carbonaceous material as the active material with the ionic liquid.

Various hitherto known carbonaceous materials may be used without particular limitation as the carbonaceous material. For example, activated carbon, graphite, graphene, carbon nanotubes, carbon nanofibers, and carbon nanohorns may be used. Of these, from the standpoint of properties such as the electrical conductivity, carbon nanotubes are preferred.

Among carbon nanotubes, single-walled carbon nanotubes consisting of a single cylindrically rolled graphene sheet, double-walled carbon nanotubes consisting of two concentrically rolled graphene sheets, and multi-walled carbon nanotubes consisting of a plurality of concentrically rolled graphene sheets are known. Any of these may be used in the invention, or two or more may be used in combination.

The content of carbonaceous material in the gel-like composition, although not particularly limited, is generally from about 0.1 to about 80 wt%, preferably from 1 to 40 wt%, and more preferably from 3 to 15 wt%.

The gel-like composition may be obtained by mixing the carbonaceous material with the ionic liquid and kneading them together. At the time of mixture, the ionic liquid may be added to the carbonaceous material, or vice versa.

The kneading method is exemplified by, without particular limitation, techniques that use a mortar and techniques that use a wet grinding mill such as a ball mill, roller mill, bead mill, jet mill or vibrating mill.

The gel-like composition may be prepared using only an ionic liquid and a carbonaceous material, although known binder polymers and conductive materials may be optionally used.

Binder polymers that are suitably selected from among known materials may be used. Illustrative examples include polyvinylidene fluoride (PVdF), polyvinyl pyrrolidone, polytetrafluoroethylene, tetrafluoroethylene-hexafluoropropylene copolymers, vinylidene fluoride-hexafluoropropylene copolymers ([P(VDF-HFP)], vinylidene fluoride-chlorotrifluoroethylene copolymers [P(VDF-CTFE)], polyvinyl alcohol, ethylene-propylene-diene terpolymers, styrene-butadiene rubbers and carboxymethylcellulose (CMC).

Illustrative examples of the conductive material that is optionally added include carbon black, ketjen black, acetylene black, carbon whiskers, carbon fibers, natural graphite, synthetic graphite, titanium oxide, ruthenium oxide, and aluminum, nickel and other metal fibers. These may be used singly or two or more may be used in combination.

The amount of conductive material added may be set to, for example, from 0.1 to 20 parts by weight per 100 parts by weight of the carbonaceous material. This amount is preferably from 0.5 to 10 parts by weight.

An electrode can be produced by applying and laminating, onto a current collector, a gel-like composition prepared by kneading together the above ionic liquid, carbonaceous material and optionally used binder polymer and conductive material.

Examples of positive electrode current collectors include aluminum foil and aluminum alloy foil.

Examples of negative electrode current collectors include copper foil, copper alloy foil, nickel foil, nickel alloy foil, stainless steel foil, aluminum foil and aluminum alloy foil.

The electrical energy storage device of the invention is not particularly limited, provided it has an electrolyte and/or electrode which uses the above-described ionic liquid. For example, the device may be one which includes, as the electrolyte and/or as at least one, and preferably both, of the polarizable electrodes in an electrical double-layer capacitor constructed of a pair of polarizable electrodes, a separator interposed between these electrodes and an electrolyte, a liquid electrolyte containing the above-described ionic liquid or an electrode containing a gel-like composition containing the ionic liquid.

Aside from the foregoing ionic liquid-containing electrolyte or electrode, the materials making up the device are not particularly limited, and may be suitably selected from among conventional known materials. Some examples are mentioned below.

Examples of common polarizable electrodes include those obtained by applying, onto a current collector, a composition containing any of various types of carbonaceous materials such as activated carbon, a binder polymer and, optionally, a conductive material.

The binder polymer, the conductive material, and the positive electrode current collector and negative electrode current collector which make up the polarizable electrodes are exemplified in the same way as above.

A solvent may be used when preparing the above composition. This solvent is selected according to the type of binder polymer, although N-methyl-2-pyrrolidone or water can generally be used.

Illustrative examples of the separator include separators made of a polyolefin such as polyethylene or polypropylene, separators made of a polyester such as polyethylene terephthalate, polyamide separators, polyimide separators, cellulose-based separators and glass-fiber-based separators.

Examples of common electrolytes include nonaqueous electrolyte solutions obtained by dissolving the above-described quaternary ammonium salt in the above-described nonaqueous organic solvent.

The electrical energy storage device (electrical double-layer capacitor) of the invention can be obtained by stacking, fan-folding or winding an electrical double-layer capacitor assembly composed of a pair of polarizable electrodes and a separator interposed therebetween. The assembly is then placed within a cell housing such as a can or a laminate pack, after which it is filled with liquid electrolyte. The housing is then mechanically sealed if it is a can or heat-sealed if it is a laminate pack.

### EXAMPLES

The invention is illustrated more fully below by way of Synthesis Examples, Working Examples and Comparative Examples, although these Examples are not intended to limit the invention.

The analytical instruments used in the Examples were as follows.
[1] ¹H-NMR Spectrometer
   Instrument: AL-400, from JEOL Ltd.
   Solvent: Deuterated dimethylformamide
[2] Viscometer
   Instrument: BROOKFIELD programmable rheometer
[3] Electrical Conductivity
   Instrument: CM-30R conductivity meter, from DKK-Toa Corporation
[4] Potential Window
   Instrument: HSV-100 Standard Voltammetry Tool, from Hokuto Denko Corporation
[5] Internal Resistance
   Instrument: RM 3548 resistance meter, from Hioki EE Corporation

### [1] Synthesis of Ionic Liquids

### [Synthesis Example 1] Synthesis of MEMP·FSA

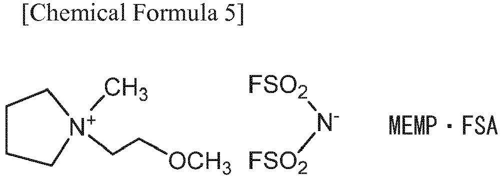

Pyrrolidine (Wako Pure Chemical Industries, Ltd.), 1.51 parts by weight, and 2-methoxyethyl chloride (Kanto Chemical Co., Ltd.), 1.00 part by weight, were mixed together and reacted for 1 hour under refluxing. Following the reaction, the reaction mixture separated into two layers. When left to cool for a while, the bottom layer solidified. The top layer alone was collected by decantation and purified by vacuum distillation, giving 0.96 part by weight of the target substance N-2-methoxyethylpyrrolidine (boiling point, 76°C; vapor pressure, 45 mmHg) in a yield of 70 %.

Next, 1.00 part by weight of the N-2-methoxyethylpyrrolidine was mixed with a two-fold volume of toluene (Wako Pure Chemical Industries, Ltd.), the mixture was placed in an autoclave, and the interior of the system was nitrogen purged. The system was closed, after which about 1.00 part by weight of methyl chloride gas (Nittoku Chemicals) was added under stirring at room temperature. During introduction of the methyl chloride gas, the temperature and internal pressure both rose; at the highest point, the temperature rose to about 53°C and the internal pressure rose to 5.5 kgf/cm² (about 5.4×10⁵ Pa). The reaction was effected in this way without heating; after 2 days, about 0.75 part by weight of methyl chloride gas was added. The reaction was additionally continued for one day, after which the pressure was released. The crystals that formed within the system were separated off by vacuum filtration and then dried using a vacuum pump, thereby giving 1.29 parts by weight of N-2-methoxyethyl-N-methylpyrrolidinium chloride (yield, 92 %).

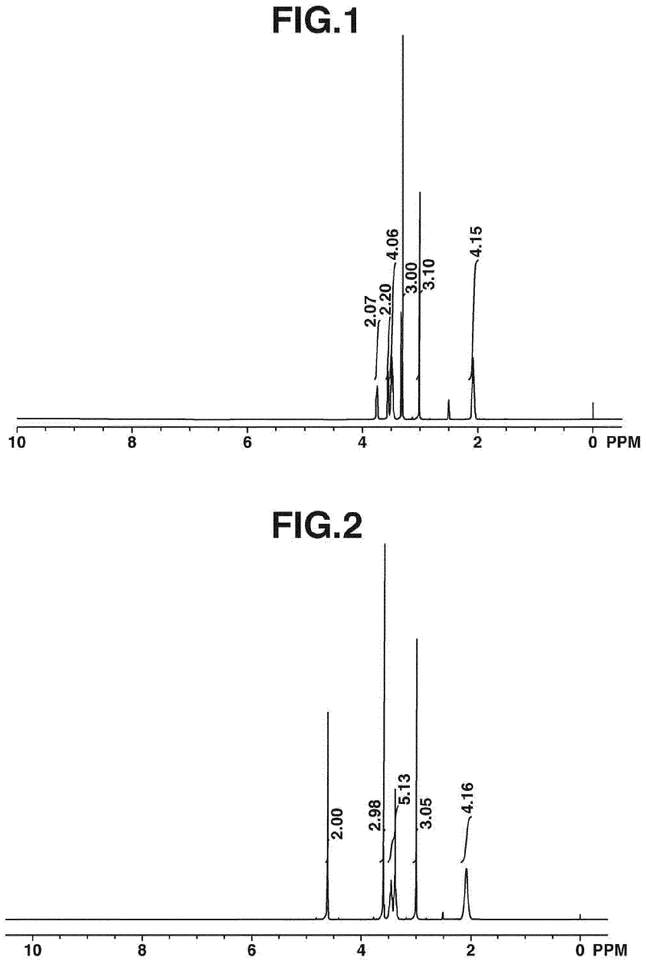

An equal volume of deionized water was added to 1.00 part by weight of the resulting N-2-methoxyethyl-N-methylpyrrolidinium chloride, and the chloride was dissolved under stirring. This solution was added under stirring to a solution of 1.29 parts by weight of potassium bis(fluorosulfonyl)amide (Kanto Chemical Co., Ltd.) dissolved in an equal volume of deionized water. The reaction was effected at room temperature and, after 3 or more hours had elapsed, the reaction mixture that had separated into two layers was collected as separate layers. The organic layer on the bottom was washed twice with deionized water and then dried using a vacuum pump, giving 1.50 parts by weight of the target substance N-2-methoxyethyl-N-methylpyrrolidinium bis(fluorosulfonyl)amide (MEMP·FSA) (yield, 83 %). The ¹H-NMR spectrum for MEMP·FSA is shown in FIG. 1. The viscosity at 25°C was 35 cP.

### [Synthesis Example 2] Synthesis of MMMP·FSA

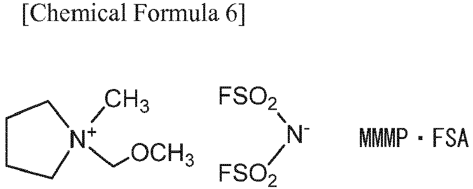

A solution of 14.4 parts by weight of N-methylpyrrolidine (Wako Pure Chemical Industries, Ltd.) dissolved in 200 parts by weight of tetrahydrofuran (Wako Pure Chemical Industries, Ltd.) was ice-cooled, and 17.1 parts of chloromethyl methyl ether (Tokyo Chemical Industry Co., Ltd.) was added under stirring. After allowing these to react overnight, the precipitated solids were collected by filtration in vacuo using a Kiriyama funnel. The resulting white solid was dried using a vacuum pump, giving 26.7 parts by weight of the intermediate N-methoxymethyl-N-methylpyrrolidinium chloride (yield, 96 %).

Next, 8.58 parts by weight of the N-methoxymethyl-N-methylpyrrolidinium chloride was dissolved in 10 parts by weight of deionized water. This solution was added under stirring to a solution of 12.5 parts by weight of potassium bis(fluorosulfonyl)amide (Kanto Chemical Co., Ltd.) dissolved in 5 parts by weight of deionized water. Stirring was continued overnight at room temperature, following which the reaction mixture that had separated into two layers was collected as separate layers. The organic layer on the bottom was washed four times with deionized water and then dried using a vacuum pump, giving 10.2 parts by weight of the target substance N-methoxymethyl-N-methylpyrrolidinium bis(fluorosulfonyl)amide (MMMP·FSA) (yield, 63 %). The ¹H-NMR spectrum for MMMP·FSA is shown in FIG. 2. The viscosity at 25°C was 20 cP.

The electrical conductivities of the ionic liquids obtained in Synthesis Examples 1 and 2 were measured. Measurement was carried out within a 25°C thermostatic chamber using a conductivity meter (CM-30R, from DKK-Toa Corporation). The results are shown in Table 1.

**[Table 1]**

| | Electrical conductivity (mS/cm) |
|---|---|
| MEMP·FSA | 7.0 |
| MMMP·FSA | 10.0 |

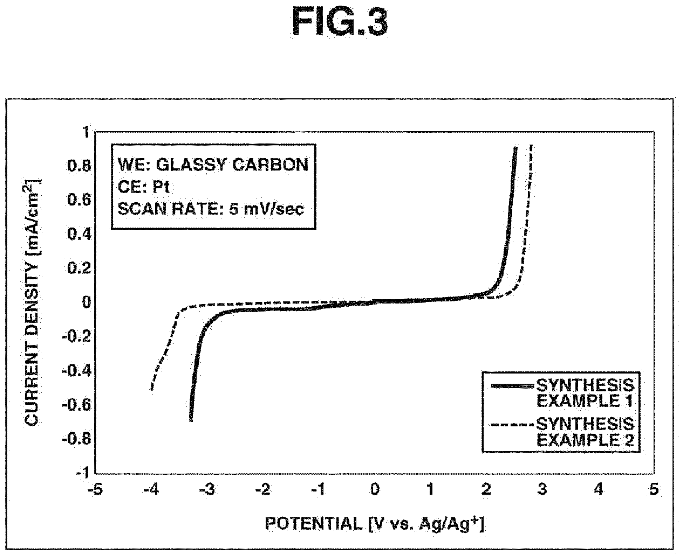

In addition, the potential windows for each of the ionic liquids obtained in Synthesis Examples 1 and 2 were measured. Those results are shown in FIG. 3.

It is apparent from FIG. 3 that both ionic liquids have broad potential windows.

### [2] Production of Electrical Double-Layer Capacitor

### [Working Example 1-1]

### (1) Production of Positive Electrode Assembly

A coating slurry for a positive polarizable electrode was prepared by mixing together the activated carbon Maxsorb MSP-20 (Kansai Coke and Chemicals Co., Ltd.), a conductive material (HS-100, from Denka Co., Ltd.) and the binder PVDF (Aldrich Co.) in the weight ratio 85:8:7 within the coating solvent N-methyl-2-pyrrolidone (NMP).

The slurry was coated on an etched aluminum foil (30B, from Japan Capacitor Industrial Co., Ltd.) as the positive current collector and then rolled using a roll press, following which the NMP was removed by drying so as to form a positive polarizable electrode, thereby giving a positive polarizable electrode assembly.

### (2) Production of Negative Electrode Assembly

A coating slurry for a negative polarizable electrode was prepared by mixing activated carbon (LPY039, from Japan EnviroChemicals, Ltd.), a conductive material (HS-100; Denka Co., Ltd.), and the binder PVDF (Aldrich Co.; weight-average molecular weight, 534,000) in the weight ratio 85:7:8 within NMP as the coating solvent.

The slurry was coated onto etched aluminum foil (30CB; Japan Capacitor Industrial Co., Ltd.) as the negative current collector and then rolled using a roll press, following which the NMP was removed by drying so as to form a negative polarizable electrode, thereby giving a negative polarizable electrode assembly.

### (3) Production of Electrical Double-Layer Capacitor

A cell was assembled by spot-welding aluminum terminals to each of the positive polarizable electrode assembly and the negative polarizable electrode assembly obtained as described above and placing a separator (TF40-35, from Nippon Kodoshi Corporation) therebetween, and the cell was inserted into an outer enclosure made of an aluminum laminate (Dai Nippon Printing Co., Ltd.). A predetermined amount of the MEMP·FSA obtained in Synthesis Example 1 was injected therein as the electrolyte, following which impregnation of the electrolyte was carried out by at least 12 hours of standing at 25°C and a reduced pressure of 10 kPa or below. The enclosure was then sealed by heat welding, giving an electrical double-layer capacitor.

### [Working Example 1-2]

Aside from using the MMMP·FSA obtained in Synthesis Example 2 instead of MEMP·FSA as the electrolyte, an electrical double-layer capacitor was produced in the same way as in Working Example 1-1.

### [Comparative Example 1-1]

Aside from using 1-ethyl-3-methylimidazolium tetrafluoroborate (EMI·BF4, from Kanto Chemical Co., Ltd.) instead of MEMP·FSA as the electrolyte, an electrical double-layer capacitor was produced in the same way as in Working Example 1-1.

### [Comparative Example 1-2]

Aside from using 2-methoxyethyl-N-methylpyrrolidinium tetrafluoroborate (MEMP·BF4) synthesized by the method described in Patent Document 1 instead of MEMP·FSA as the electrolyte, an electrical double-layer capacitor was produced in the same way as in Working Example 1-1.

The initial characteristics of the electrical double-layer capacitors produced as described above were measured by the following methods. The results are shown in Table 2.

First, the capacitance was calculated from the total amount of energy discharged when, after being constant-current charged to 3.0 V at the one-hour rate and constant-voltage charged thereafter for 30 minutes, the capacitor was subsequently constant-current discharged from 3.0 V to 0 V at the one-hour rate. The internal resistance was measured with a resistance meter (RM 3548, from Hioki EE Corporation). Measurements in each case were carried out following at least two hours of standing in a thermostatic chamber at 25°C.

**[Table 2]**

| | Initial characteristics | |
|---|---|---|
| | Capacitance (F) | Internal resistance (Ω) |
| Working Example 1-1 | 2.1 | 0.4 |
| Working Example 1-2 | 2.7 | 0.3 |
| Comparative Example 1-1 | 2.1 | 0.3 |
| Comparative Example 1-2 | 1.9 | 0.9 |

Next, the capacitance of each of the electrical double-layer capacitors produced as described above was measured at different temperatures. The measurement temperatures were set to -20°C, 0°C and 60°C, and charge-discharge tests were carried out after letting the capacitors stand for 3 hours in the respective temperature environments. The charge/discharge conditions were the same as the charge/discharge conditions used when determining the initial characteristics. The results are shown in Table 3.

As shown in Table 3, the electrical double-layer capacitor produced in Comparative Example 1-1 was unable to charge at -20°C. By contrast, the electrical double-layer capacitor produced in Working Example 1-1 was able to charge and discharge even at -20°C, and a good discharge capacitance was obtained.

**[Table 3]**

| Discharge capacitance (F) | Measurement temperature | | |
|---|---|---|---|
| | -20°C | 0°C | 60°C |
| Working Example 1-1 | 1.0 | 1.7 | 2.4 |
| Working Example 1-2 | 1.6 | 1.9 | 2.6 |
| Comparative Example 1-1 | could not charge | 1.3 | 2.7 |
| Comparative Example 1-2 | 0.4 | 1.4 | 2.3 |

As is apparent from the above results, the electrical double-layer capacitors of the invention are devices having a broad applicable temperature range of from -20°C to 60°C at which they can be charged and discharged.

## Claims

1. An electrical energy storage device **characterized by** comprising an ionic liquid of formula (1) 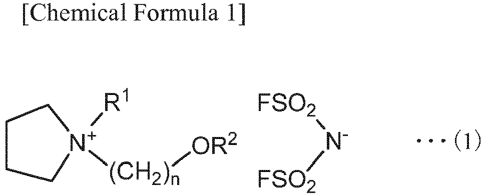 (wherein R¹ and R² are each independently an alkyl group of 1 to 5 carbon atoms, and n is 1 or 2).

2. The electrical energy storage device of claim 1 which comprises a pair of polarizable electrodes, a separator interposed between the electrodes, and an electrolyte,
wherein the electrolyte includes the ionic liquid of formula (1).

3. The electrical energy storage device of claim 1, wherein the electrolyte does not include an organic solvent.

4. The electrical energy storage device of claim 2 or 3, wherein the electrolyte consists solely of the ionic liquid of formula (1).

5. The electrical energy storage device of any one of claims 1 to 4, wherein R¹ and R² are each independently a methyl group or an ethyl group.

6. The electrical energy storage device of claim 5, wherein R¹ and R² are both methyl groups.
